# EUROPÄISCHE PATENTSCHRIFT

(11) **EP 2 640 582 B1**
(45) Veröffentlichungstag und Bekanntmachung des Hinweises auf die Patenterteilung: **14.05.2014**
(21) Anmeldenummer: 11779418.0
(22) Anmeldetag: 08.11.2011
(51) Int. Cl.: B60B 33/00, B60B 33/02

(54) **ROLLE**
ROLLER
ROULETTE

(30) Priorität: 15.11.2010 DE 102010060549
(43) Veröffentlichungstag der Anmeldung: 25.09.2013
(73) Patentinhaber: Tente GmbH & Co. KG, 42929 Wermelskirchen (DE)
(72) Erfinder: BLOCK, Wolfgang, 42929 Wermelskirchen (DE); HARKSEN, Uwe, 42929 Wermelskirchen (DE)
(74) Vertreter: Müller, Enno
(86) Internationale Anmeldenummer: PCT/EP2011/069607
(87) Internationale Veröffentlichungsnummer: WO 2012/065877

(56) Entgegenhaltungen:
- WO-A1-2008/148169
- DE-A1- 3 243 211
- US-A1- 2009 276 977

## Beschreibung

Die Erfindung betrifft eine Rolle mit einem in einem Gehäuse aufgenommenen Rad und einem an dem Gehäuse angebrachten Feststeller, wobei der Feststeller durch Fußbetätigung eines Betätigungselementes, das, bezogen auf eine Vertikale, welche einen Befestigungsbereich der Rolle durchsetzt, radial ausgreifend angeordnet ist, zu betätigen ist

Derartige Rollen, beispielsweise in der Ausgestaltung als Lenkrollen, sind in vielfältiger Hinsicht bekannt geworden. Es wird etwa auf die DE 24 59 580 A1 und die DE 3917 291 C2 verwiesen. Die Fußbetätigung dieser mit einem an der Rolle selbst ausgebildeten Betätigungselement versehenen Rollen wird zwar im Allgemeinen als zufriedenstellend empfunden, es wird jedoch nach einer Möglichkeit gesucht, den Komfort der Betätigung noch weiter zu verbessern.

Bei einer aus der W02008/148169 A1 bekannten Rolle ist ein Betätigungsbügel vorgesehen, der sich über die Breite der zusammengefasst als Doppelrolle angeordneten zwei Räder der Rolle erstreckt. Die DE 32 43 211 A1 zeigt eine übliche Rolle mit einem in Erstreckungsrichtung des Rades vorne überragenden Betätigungsteil.

Ausgehend von dem zuletzt genannten Stand der Technik beschäftigt sich die Erfindung mit der Aufgabe, eine Rolle anzugeben, die hinsichtlich einer Feststellung durch Fußbedienung vorteilhaft ausgebildet ist

Diese Aufgabe ist beim Gegenstand des Anspruches 1 gelöst, wobei darauf abgestellt ist, dass ein Betätigungsabschnitt des Betätigungselementes sich umfangsmäßig jedenfalls so weit erstreckt, dass eine zweite Fußbetätigung in Umfangsrichtung bezogen auf die Vertikale neben einem Bereich des Betätigungsabschnittes durchführbar ist, über den eine erste Fußbetätigung vorgenommen wurde, welcher Betätigungsabschnitt eine Betätigung des Feststellers der Rolle auch zulässt, ohne dass der Fuß notwendig in Überdeckung zu dem Rad auf dem Betätigungsabschnitt des Betätigungselementes aufzusetzen ist.

Erfindungsgemäß ist ein Betätigungselement mit einem sich in Umfangsrichtung mit einem sich in Umfangsrichtung breit erstreckenden Betätigungsabschnitt angegeben. Bevorzugt ist der Betätigungsabschnitt auch in Umfangsrichtung mit einer solchen Erstreckung ausgebildet, dass auch eine dritte oder weitere Fußbetätigung möglich ist, ohne dass der Bereich der vorherigen Fußbetätigungen wieder benutzt ist. Dies erbringt die Möglichkeit, insbesondere bei einer Lenkrolle, über einen gewissen Bereich bis hin zu vollkommen unabhängig von der Winkelausrichtung des Rades eine Betätigung vorzunehmen. Die Vorteilhaftigkeit ist auch bei einer Bockrolle gegeben. Wenn etwa ein Gerät mit der Bockrolle unmittelbar an einer Wand steht, kann gleichwohl von der Seite her beispielsweise eine Fußbetätigung vorgenommen werden. Der Bereich einer Fußbetätigung kann beispielsweise einem Teil der Radbreite, beginnend etwa mit einem Drittel der Radbreite, bis hin zu einem der Radbreite entsprechenden Maß oder bis hin zu dem 1,5-fachen des Maßes einer Radbreite entsprechen. Hierbei ist als Radbreite beispielsweise ein Maß zwischen 3 und 10 cm anzunehmen, wobei ein solches Maß bevorzugt dann einzusetzen ist, wenn die tatsächliche Radbreite die genannte untere Grenze unterschreiten sollte. Das Betätigungselement erstreckt sich bevorzugt über mindestens eine Radbreite in Bezug auf die Vertikale in Umfangsrichtung über das Rad oder dessen gedachte Verlängerung hinaus.

Soweit sich die tatsächliche Radbreite innerhalb der vorgenannten maßlichen Bandbreite ergibt, kann auch in dieser Beziehung vorgenannte Bandbreite, oder ein singulärer Wert hieraus, angesetzt werden. In üblicher Weise erstreckt sich zumindest ein Betätigungsabschnitt des Betätigungselementes in Überdeckung zu dem Rad oder in Bezug auf die Vertikale in Überdeckung zu einer gedachten Verlängerung des Rades in radialer Richtung. Also etwa nach vorne oder nach hinten über das Rad hinausragend. Die genannte Lösung verbreitert diesen Betätigungsabschnitt wesentlich in Umfangsrichtung.

Hinsichtlich des Feststellers kann es sich beispielsweise um eine Bremsfeststellung und/oder eine Richtungsfeststellung handeln.

Es ist bevorzugt, dass der Betätigungsabschnitt über einen Viertelkreis oder mehr umlaufend ausgebildet ist. Bevorzugt ist er in geschlossener Form, weiter bevorzugt auch über einen Gesamtkreis, umlaufend ausgebildet. Er kann insbesondere als rotationssymmetrischer Körper ausgebildet sein. Der umlaufende Betätigungsabschnitt ermöglicht die Betätigung des Feststellers weitgehend oder vollkommen unabhängig von der Ausrichtung der Rolle. Hinsichtlich der Umfangserstreckung kann auch eine Charakterisierung im Hinblick auf einen Umfangswinkel angezeigt sein. Der Betätigungsabschnitt erstreckt sich diesbezüglich bevorzugt bezogen auf seinen radial äußersten Abschnitt über einen Umfangswinkel von 20° oder mehr, bis hin zu 360°.

Weiter ist bevorzugt, dass das Betätigungselement sich bei einer Betätigung insgesamt vertikal bewegt. Beispielsweise kann hierzu ein zentraler Zapfen oder Topf ausgebildet sein, letzterer etwa nach unten öffnend, um welchen herum sich, zumindest über einen Teil des Umfangs, das Betätigungselement erstreckt. Der Zapfen oder Topf erbringt bevorzugt dann zugleich eine zentrale Führung für die Vertikalbewegung.

Im Weiteren ist als Feststeller bevorzugt ein auf das Rad, insbesondere eine Lauffläche des Rades, wirkendes Einwirkteil vorgesehen. Dies jedenfalls, um eine Bremsfeststellung zu erreichen. Zur Richtungsfeststellung kann als Feststeller ein insofern an sich bekanntes Einrastelement, etwa Zahn-Einrastelement, zur Zusammenwirkung mit einem relativ zu dem drehbaren Teil der Rolle feststehenden Gegenrastteil vorgesehen sein.

Das Einwirkungselement ist durch das Betätigungselement beispielsweise über eine Keilpaarung beaufschlagt. Hierbei kann das Betätigungselement in einem Querschnitt eine Keilfläche aufweisen, die durch einen an dem Betätigungselement ausgebildeten Stößel, der im Zuge der Bewegung des Betätigungselementes vertikal verfährt, ausgelenkt wird und so aus einer Nichteingriffsstellung in eine Eingriffsstellung zu dem Rad verlagert wird. Die Keilpaarung kann weiter bevorzugt so vorgesehen sein, dass sich im Festsetzungszustand eine Selbsthemmung ergibt Die Rückbewegung des Betätigungselementes kann dann etwa durch Anheben des Betätigungselementes, im Hinblick auf eine Fußbetätigung durch Untergreifen des Betätigungselementes mit der Fußspitze beispielsweise, erreicht sein.

Eine weitere Möglichkeit der Zusammenwirkung mit dem Einwirkungselement ist über einen Beaufschlagungsnocken möglich. Hierbei drückt der vertikal verlagerbare Beaufschlagungsnocken das Einwirkteil in seine Eingriffsstellung, und es erfolgt eine Verrastung in der Eingriffsstellung.

Besonders bevorzugt ist in diesem Zusammenhang, dass das Betätigungselement in zwei aufeinanderfolgenden Betätigungen mit unterschiedlichen Beaufschlagungsnocken auf das Einwirkungselement einwirkt. Diese Maßnahme ermöglicht es, anstelle einer hin- und hergehenden Bewegung betreffend einen Beaufschlagungsnocken, eine Folgebewegung betreffend mehrere Beaufschlagungsnocken, durchzuführen. Darüber hinaus ist in diesem Zusammenhang bevorzugt, dass der Beaufschlagungsnocken Teil eines eine Mehrzahl von Beaufschlagungsnocken aufweisenden Nockenrades ist. Zur Betätigung kann dann eine Drehung des Nockenrades erfolgen, wobei zwischen zwei Beaufschlagungsnocken ein Freiraum gegeben ist, der eine Rückverlagerung des Einwirkteils in eine Freigabestellung ermöglicht. Hierzu kann das Einwirkteil beispielsweise in seine Freigabestellung federvorgespannt sein.

Weiter ist auch bevorzugt, dass ein oder mehrere Indikatoren vorgesehen sind, die dem Benutzer eine Bremsfeststellung anzeigen. Die Indikatoren können als feststehende Stangenabschnitte ausgebildet sein, die sich bevorzugt oder jedenfalls im Wesentlichen, zumindest hinsichtlich Ihres als Anzeige genutzten Bereiches, vertikal erstrecken. Beim Niederdrücken des Einwirkungselementes stehen die Spitzen der Stangenteile entsprechend nach oben vor. Die Indikatoren können aber auch über eine Welle betätigt sein, insbesondere eine Welle, auf der auch die genannten Einwirkungsnocken angeordnet sind. Sie werden dann aktiv nach oben bezüglich des Einwirkungselementes im Rahmen der Betätigung ausgefahren. Es kommt bei dieser Ausführungsform für die Sichtbarkeit eines Indikators nicht darauf an, ob das Betätigungselement sich in einer angehobenen oder abgesenkten Stellung befindet Das Betätigungselement kann sich nach erfolgter Betätigung, also einer Versetzung des Einwirkungselementes in die Bremsstellung oder in die Freigabestellung, jeweils in seine Ausgangsstellung zurückverlagern, sich also im Bremszustand in seiner Ausgangsstellung befinden, wobei gleichwohl die Indikatoren - beispielsweise nach oben - vorragend sind. Bei einer nächsten Betätigung werden dann die Indikatoren durch die Welle wieder nach unten bewegt, so dass in der Freigabestellung, in der sich bevorzugt dann das Einwirkungsteil auch auf seiner Ausgangshöhe befindet, die Indikatoren nicht nach oben überstehen. Die Indikatoren können auch so ausgeführt sein, dass sie in Form von Zeigerelementen mit der Welle ausgebildet sind. Je nach Drehstellung der Welle können sie dann nach außen über eine ansonsten die weiteren Zeiger abdeckende Abdeckung vorstehen.

Eine weitere Ausführung der Indikator-Funktion kann sein, dass über die Welle je nach Drehstellungsgrad nach außen über ein formschlüssiges Zeigerelement die Funktions-Stellung angezeigt wird.

Die vor- und nachstehend angegebenen zahlenmäßigen Bandbreiten oder Verhältnisbereiche schließen auch, soweit nicht ohnehin bereits exemplarisch angegeben, sämtliche Zwischenwerte als offenbart ein, insbesondere in Ein-Zehntel-Schritten der jeweiligen Dimension, gegebenenfalls auch dimensionslos, also beispielsweise 1/10° etc., zur Eingrenzung der genannten Bereichsgrenzen von unten und/oder oben, alternativ oder ergänzend aber auch im Hinblick auf die Offenbarung eines oder mehrerer singulärer Werte aus dem jeweiligen Bereich.

Nachstehend ist die Erfindung weiter anhand der beigefügten Zeichnung erläutert, die aber lediglich Ausführungsbeispiele darstellt. Hierbei zeigt:
- Fig. 1: einen Querschnitt durch eine Rolle einer ersten Ausführungsform, im unbetätigten Zustand;
- Fig. 2: einen Ausschnitt aus Fig. 1, im betätigten Zustand;
- Fig. 3: eine Draufsicht auf die Rolle gemäß Fig. 1;
- Fig. 4: eine perspektivische Einzeldarstellung des Einwirkungselementes der Rolle gemäß Fig. 1;
- Fig. 5: eine Explosionsdarstellung der Rolle erster Ausführungsform;
- Fig. 6: einen Querschnitt durch eine Rolle einer zweiten Ausführungsform, mit in Freigabestellung befindlichem Einwirkteil;
- Fig. 7: eine Darstellung gemäß Fig. 6, in in Bremsstellung befindlichem Einwirkteil, zusätzlich mit einer Schaltanzeige;
- Fig. 8: eine perspektivische Ansicht von oben der Rolle gemäß Fig. 6;
- Fig. 9: eine Herausvergrößerung des Bereiches des Einwirkungselementes der Rolle gemäß Fig. 7;
- Fig. 10: eine Einzeldarstellung der die Beaufschlagungsnocken aufweisenden Achse, mit endseitigem Betätigungselement für die Indikatoren;
- Fig. 11: eine schematische Seitenansicht der Rolle gemäß Fig. 8, mit einer alternativen Ausführung der Indikatoren, in der Betätigungsstellung;
- Fig. 12: eine Darstellung gemäß Fig.11, mit den Indikatoren in der Freigabestellung;
- Fig. 13: eine Darstellung der Rolle gemäß Fig. 6, im Bereich der Indikatoren-Betätigung, in der Freigabestellung; und
- Fig. 14: eine Darstellung gemäß Fig. 13, in der Betätigungsstellung gemäß Fig. 7.

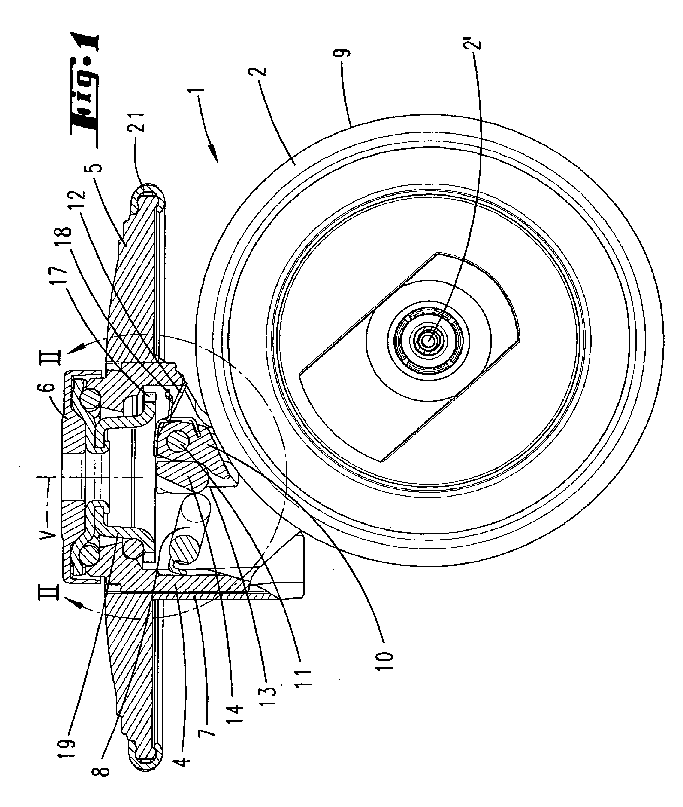

Dargestellt und beschrieben ist zunächst mit Bezug zu den Figuren 1 bis 5 eine Rolle 1 erster Ausführungsform.

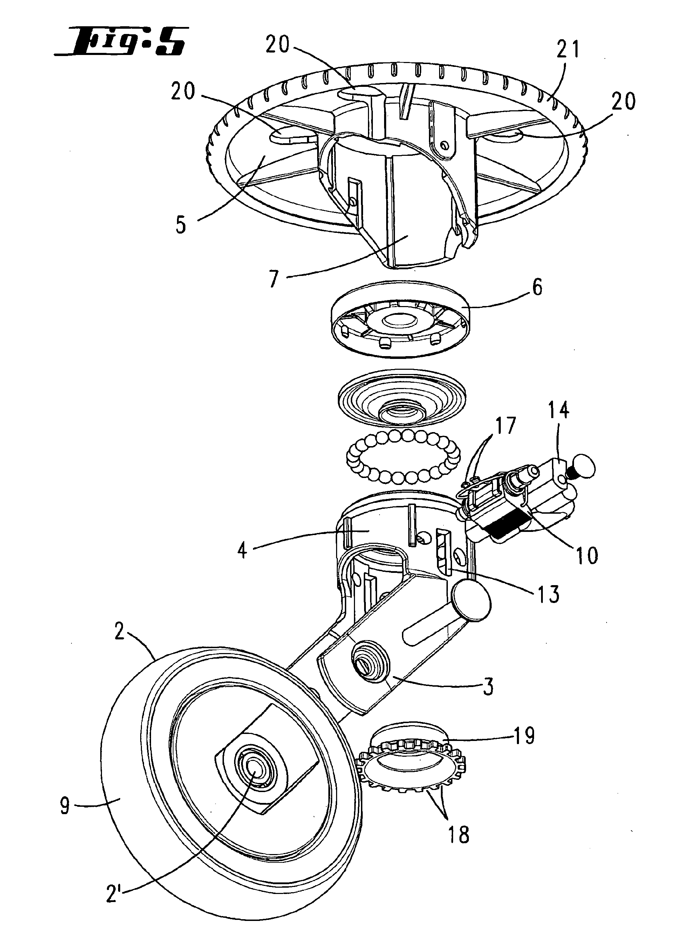

Die Rolle 1 weist ein Rad 2 auf, das in einer Gabel 3, siehe auch Fig. 5, aufgenommen ist. Die Gabel 3 geht in einen topfartigen Vertikalabschnitt 4 über, der bezüglich einer Radachse 2' ersichtlich seitlich versetzt vertikal verläuft. Dieser Vertikalabschnitt 4 bildet zusammen mit der Gabel 3 ein Gehäuse der Rolle 1, in welchem das Rad 2 aufgenommen ist.

Der Vertikalbereich 4 stellt weiter eine Führung für ein Betätigungselement 5 dar, das bezogen auf eine einen Befestigungsbereich 6 der Rolle 1 durchsetzende Vertikale V radial ausgreifend angeordnet und ausgebildet ist. Das Betätigungselement 5 ist beim Ausführungsbeispiel als kreisringscheibenartiger Körper mit einem hier, bevorzugt auf einem Teil des Umfangs, nach unten ragenden Zylinderfortsatz 7 gebildet. Das Betätigungselement 5 ist an einer Außenfläche des Vertikalabschnitts 4 geführt.

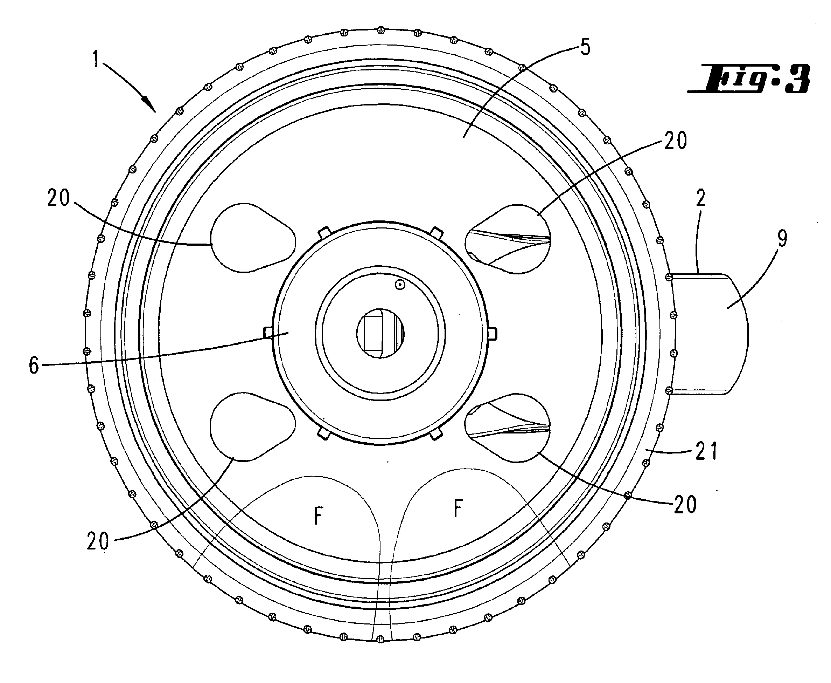

Dadurch, dass das Betätigungselement 5 als Kreisringkörper ausgebildet ist, wie sich insbesondere auch aus Fig. 3 ergibt, kann eine Betätigung der Feststellung in der Rolle 1 in jeder radialen Richtung, bezogen auf den Befestigungsbereich 6 erfolgen. Die Betätigung erfolgt durch eine Fußbeaufschlagung.

Die gesamte Oberfläche des Betätigungselementes 5 kann als Betätigungsabschnitt genutzt werden. In. Fig. 3 sind die Vielzahl von über den Umfang nebeneinander möglichen Fußbetätigungen durch Fuß-(Schuh-)Grundrisse F verdeutlicht. Die Betätigung erfolgt sinnvollerweise nur mit einem vorderen Fuß-(Schuh-)Bereich. Die Oberfläche des Betätigungselementes 5 bildet bei den hier beschriebenen Ausführungsbeispielen jeweils einen Umlauf an dem Betätigungsabschnitt aus.

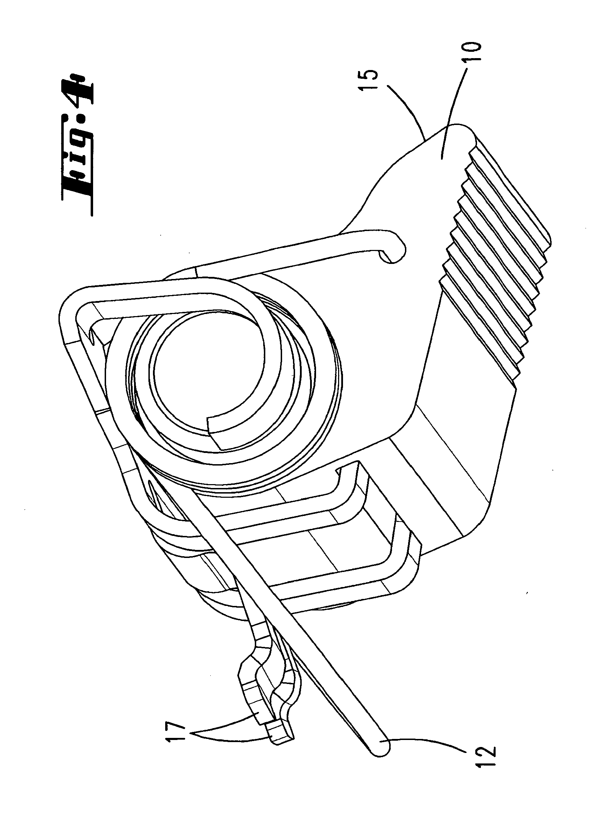

Es ist weiter als erster Feststeller ein auf eine Lauffläche 9 des Rades 2 wirkendes Einwirkteil 10 vorgesehen. Das Einwirkteil 10 ist beim Ausführungsbeispiel 1 ein Bremsteil. Dieses Einwirkteil 10 ist mittels einer Achse 11 in dem Vertikalabschnitt 4 um die Achse 11 drehbar, die sich horizontal erstreckt, befestigt. Mittels eines Federteils 12 (vgl. auch Fig. 4) ist eine Vorspannung in die in Fig. 1 dargestellte Nichtbetätigungsstellung gegeben.

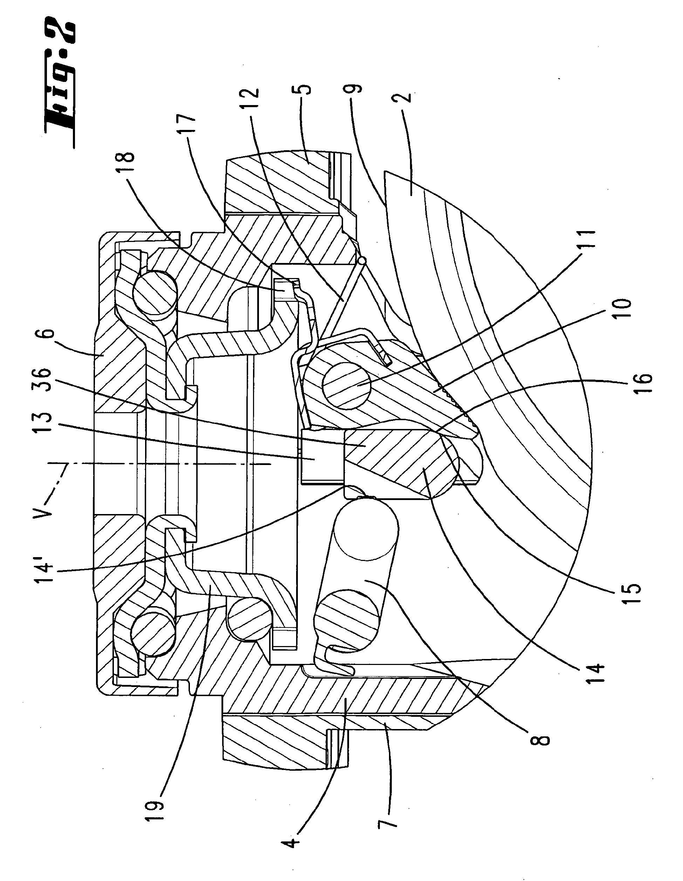

Unter Durchgriff eines entsprechenden vertikalen Langloches 13, vgl. etwa Fig. 5, in dem Vertikalabschnitt 4 ist an dem Betätigungselement 5, bevorzugt verbunden mit dessen Wandung 7, ein Drücker 14 vorgesehen. Der Drücker 14 wirkt mit einer Schrägfläche 15 des Einwirkteils, bei insgesamt keilförmiger Ausbildung des Einwirkteils in diesem Bereich, zusammen. Im niedergedrückten Zustand, siehe Fig. 2, ergibt sich in dem Bereich 16 eine Selbsthemmung zwischen dem Drücker 14 und dem Einwirkteil 10.

Der Drücker 14 wirkt weiter auch mit einem als Gegenlager wirkenden Teil 8 zusammen. Dieses Teil 8 ist gekröpft ausgebildet, so dass sich im Bereich der Kröpfung, durch welchen auch der Schnitt gemäß Fig. 2 gelegt ist, ein Freiraum zu dem Drücker 14 ergibt. Der Drücker 14 weist zudem in diesem Bereich eine Abschrägung 36 auf. Die Kröpfung und die Abschrägung 36 dienen dazu, eine Möglichkeit zum Durchgreifen eines Schraubendrehers zu ergeben, um im Zentralbereich der Rolle eine Montage vornehmen zu können. Das Teil 8 ist bevorzugt als Hartkunststoffteil ausgebildet. Es ist in der Gabel 3 bzw. dem Vertikalabschnitt 4 gelagert.

Der Drücker 14 weist zudem eine Ausnehmung 14', die mit dem Teil 8 in der Bremsstellung gemäß Fig. 2 zusammenwirkt. Hierdurch ist insgesamt eine zuverlässige Selbsthaltung in der Bremsstellung erreicht.

Weiterhin ist das Betätigungselement 5 nicht oder nur mit einer schwachen Federkraft in seiner Ausgangsstellung gemäß Fig. 1 vorgespannt. Ohne weitere Einwirkung bleibt also die der Bremsfeststellung des Rades gemäß Fig. 2 entsprechende abgesenkte Stellung des Betätigungselementes 5 erhalten, bis willentlich eine Lösung der Bremsstellung vorgenommen wird.

An dem Einwirkteil 10 ist weiterhin als zweiter Feststeller ein Richtungsfeststeller 17 vorgesehen, der mit einer Verzahnung 18 des in Bezug auf den Befestigungsabschnitt 6 feststehenden Lagerteils 19 zusammenwirken kann, siehe beispielsweise Figuren 2 und 4.

Mit dem Befestigungsbereich 6 ist weiterhin noch eine hier nicht im Einzelnen dargestellte Befestigungsplatte verbunden. Diese Befestigungsplatte kann dann mittels Schrauben an einem Gegenstand wie etwa einem Möbelstück oder dergleichen angebracht sein. Um diese Schrauben betätigen zu können, sind bevorzugt in dem Betätigungselement 5 Durchgriffsöffnungen 20 ausgebildet (vgl. auch Fig. 3).

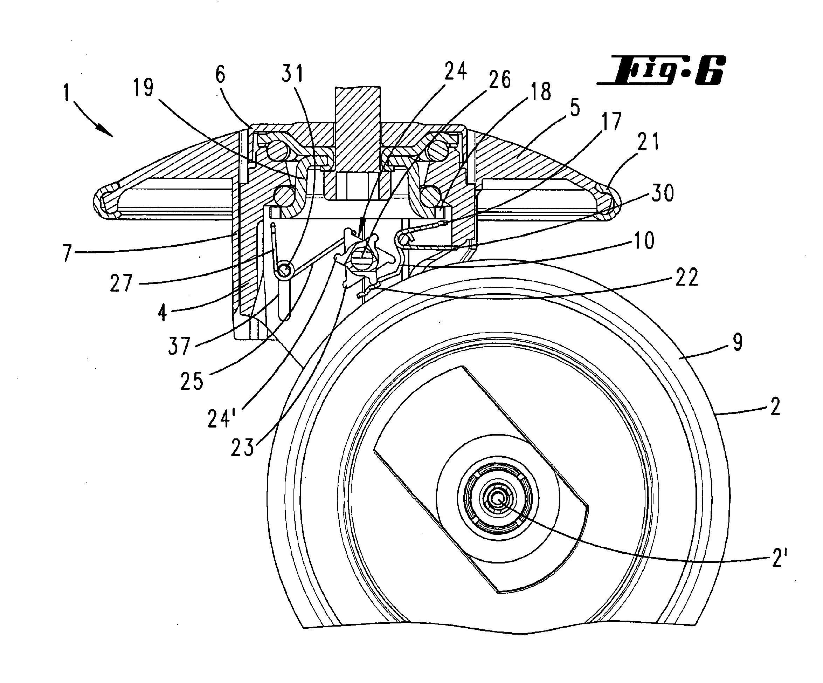

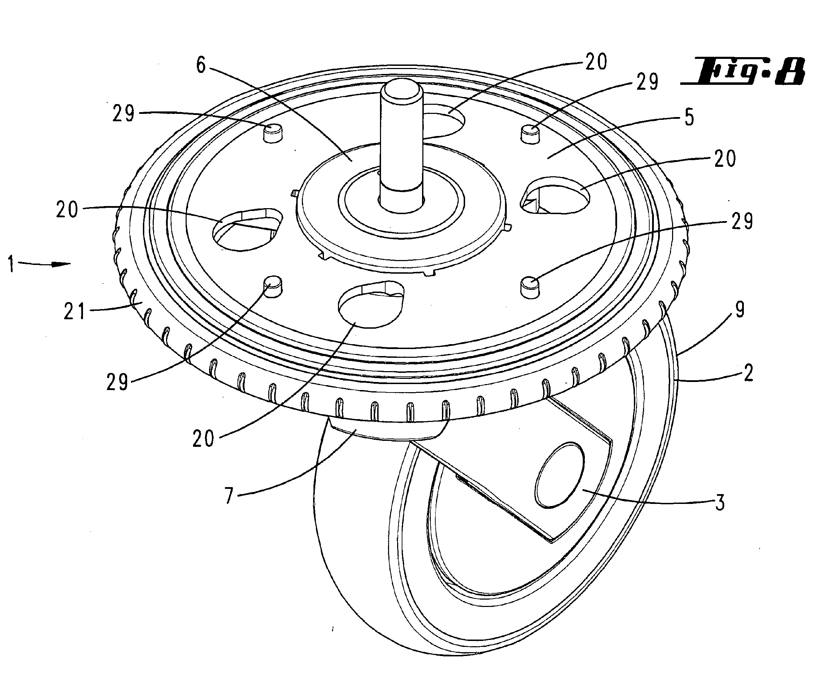

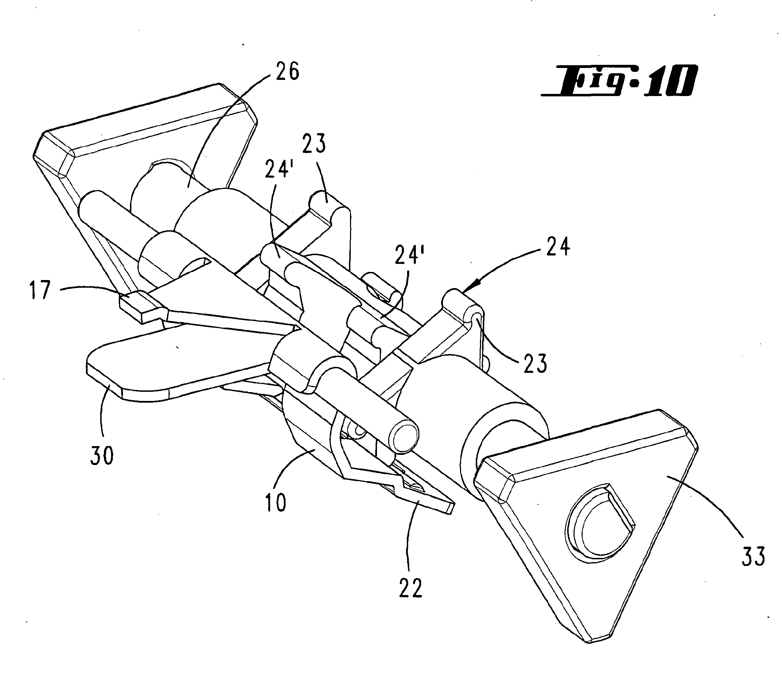

In den Figuren 6 bis 14 ist eine weitere Ausführungsform, auch mit unterschiedlichen Indikatoren, dargestellt. Gleiche Teile sind mit gleichen Bezugszeichen wie in Bezug auf die erste Ausführungsform verwendet, versehen.

Das Betätigungselement 5 der zweiten Ausführungsform ist in gleicher Weise als Kreisscheibenkörper gebildet, hier jedoch mit einer stärker nach radial außen abfallende konvexe Oberfläche als bei der ersten Ausführungsform.

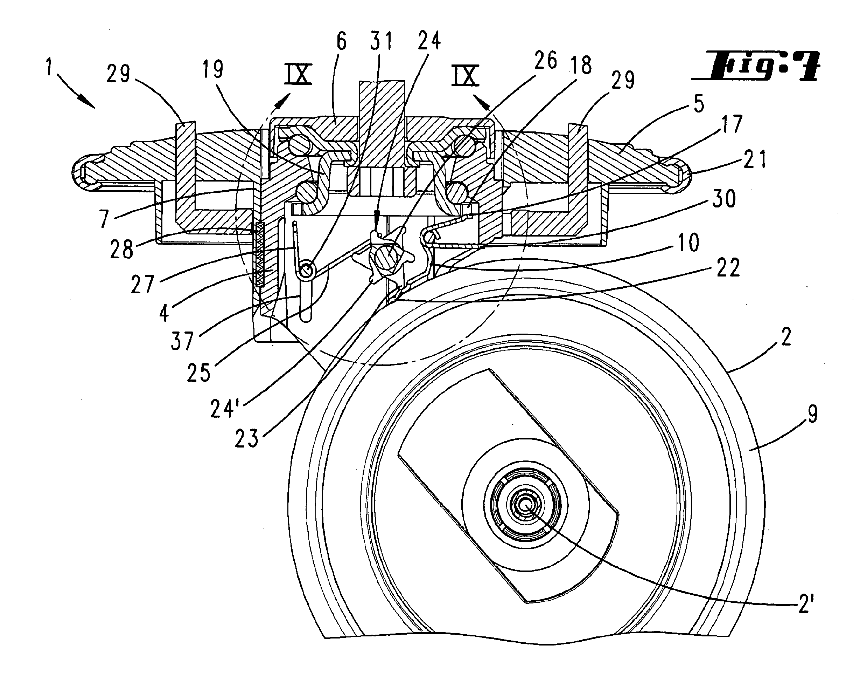

Im Unterschied zu der zunächst beschriebenen Ausführungsform ist das Einwirkelement 10 bei dieser zweiten Ausführungsform oberseitig mit einer Rastaufnahme 22 ausgebildet. In diese Rastaufnahme ragt im Betätigungszustand, wie er in Fig. 7 dargestellt ist, ein Beaufschlagungsnocken 23. Der Beaufschlagungsnocken 23 ist an einem Nockenrad 24 ausgebildet, das beim Ausführungsbeispiel über den Umfang drei Beaufschlagungsnocken 23 aufweist. Das Nockenrad 24 ist um eine Horizontalachse drehbar vorgesehen. Weiter sind winkelversetzt, bevorzugt wie dargestellt in der Winkelhalbierenden, drei Mitnehmernocken 24' an dem Nockenrad ausgebildet. Die Beaufschlagungsnocken 23 bzw. die Mitnehmernocken 24' befinden sich in Überdeckung zu einem Betätigungsbügel 25, der beim Betätigen, siehe etwa den Unterschied zwischen Fig. 6 und 7, 9, diesen jeweiligen Nocken nach unten zieht und dadurch das Nockenrad jeweils um einen Abschnitt um die Achse 26 dreht. Der Betätigungsbügel 25 ist zur Vertikalbewegung mit dem Betätigungsteil 5 verbunden. Bei der Rückbewegung des Betätigungselementes 5, also nach erfolgtem Niederdrücken, überläuft der Betätigungsbügel 25 den jeweiligen Nocken 23 oder, in der Abfolge, den jeweiligen Mitnehmernocken 24', ohne eine Drehbewegung des Nockenrades 24 hierbei auszulösen.

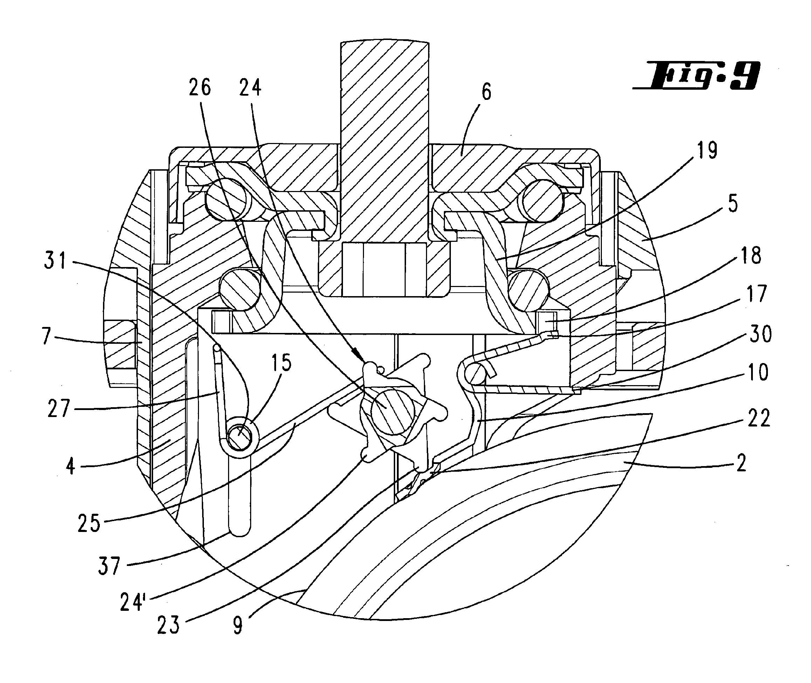

Wie etwa aus Fig. 9 ersichtlich, ist der Betätigungsbügel 25 ein Schenkel eines im Wesentlichen V-förmig gestalteten Drahtteils. Die Schenkel dieses V-förmigen Drahtteils gehen von einer gemeinsamen Wicklung 15 aus. Die Wicklung 15 ist mittels einer Wicklungsachse 31 in einem Langloch 37 geführt Im Zuge des Niederdrückens ergibt sich eine Verringerung des eingeschlossenen Winkels zwischen den V-Schenkeln und bei Rückbewegung entsprechend eine Vergrößerung. Dies auf Grund der im Sinne einer Spreizung des V wirkenden Federkraft in dem Betätigungsbügel 25. Der eine, an dem Vertikalabschnitt 4 sich abstützende V-Schenkel des Betätigungsbügels ist damit ein Federbügel 27.

Das Betätigungselement 5 wirkt bei der zweiten Ausführungsform also im Sinne eines Schrittschaltwerkes mit dem Nockenrad 24 zusammen. Das Nockenrad 24 wird schrittweise, ohne Änderung der Drehrichtung, bewegt. Bei jedem Schritt wird entweder ein Mitnehmernocken 24' in Überdeckung zu dem Einwirkteil 10 gebracht, wobei das Einwirkteil 10 dann in der Freigabestellung gemäß Fig. 6 ist, auf Grund der Wirkung einer mit dem Einwirkteil 10 verbundenen Feder 30, die das Einwirkteil 10 ständig in die Nichteingriffsstellung gemäß Fig. 6 vorspannt, oder es kommt ein Beaufschlagungsnocken 23 in Wirkung, wodurch sich die Betätigungsstellung gemäß Fig. 7 bzw. Fig. 9 ergibt. In der Betätigungsstellung gemäß Fig. 7 bzw. Fig. 9 ist auch zugleich eine Richtungsfeststellung erreicht, durch den auch bei diesem Ausführungsbeispiel vorgesehenen Richtungsfeststeller 17, der wiederum mit der Verzahnung 18 in Eingriff kommt. Konkret ist der Richtungsfeststeller 17 mit der Feder 30 einteilig ausgebildet.

Weiter im Unterschied zu der ersten Ausführungsform kann bei dieser zweiten Ausführungsform vorgesehen sein, dass das Betätigungselement 5 durch eine Rückstellfeder 28 in seiner Ausgangsstellung jeweils vorgespannt ist

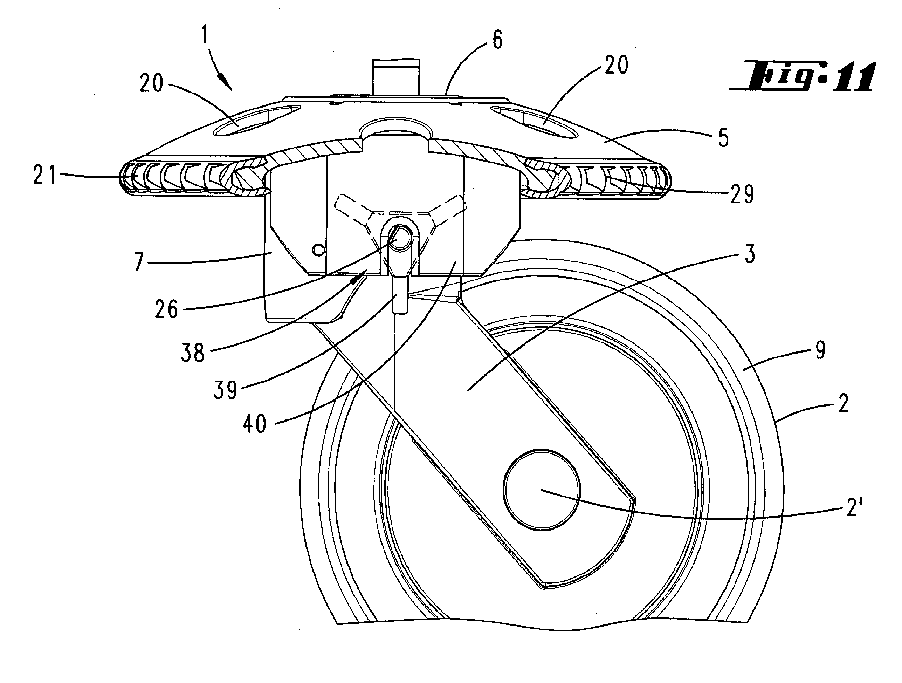

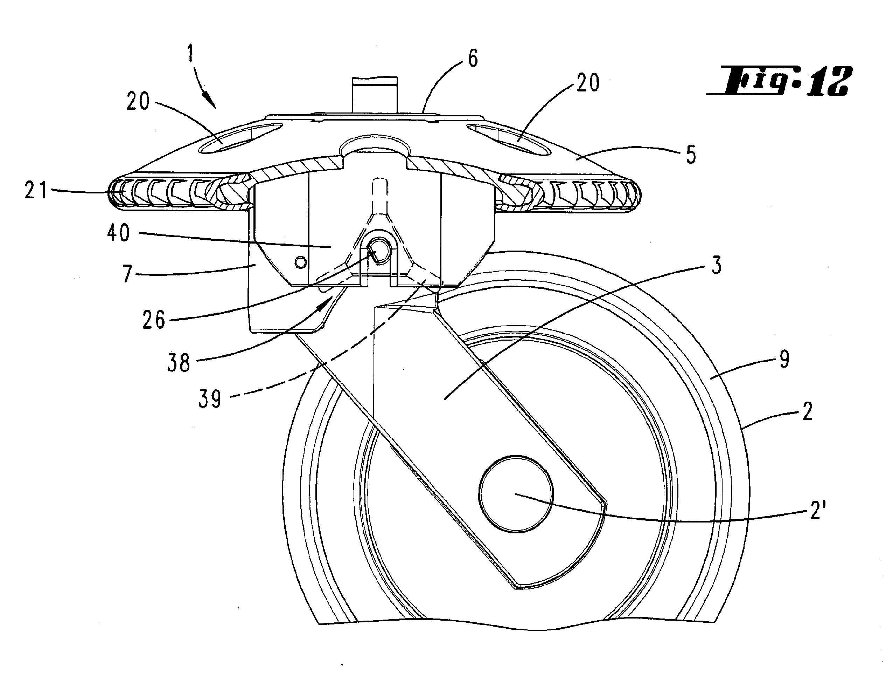

Bei der zweiten Ausführungsform sind auch bevorzugt, was aber grundsätzlich auch bei der ersten Ausführungsform möglich ist, Indikatoren 29 vorgesehen, die dem Benutzer eine Bremsfeststellung anzeigen. In den Figuren 7, 8 und 10, sowie 13, 14, ist eine erste Ausführungsform der Indikatoren wiedergegeben. In den Fig.11 und 12 eine zweite Ausführungsform.

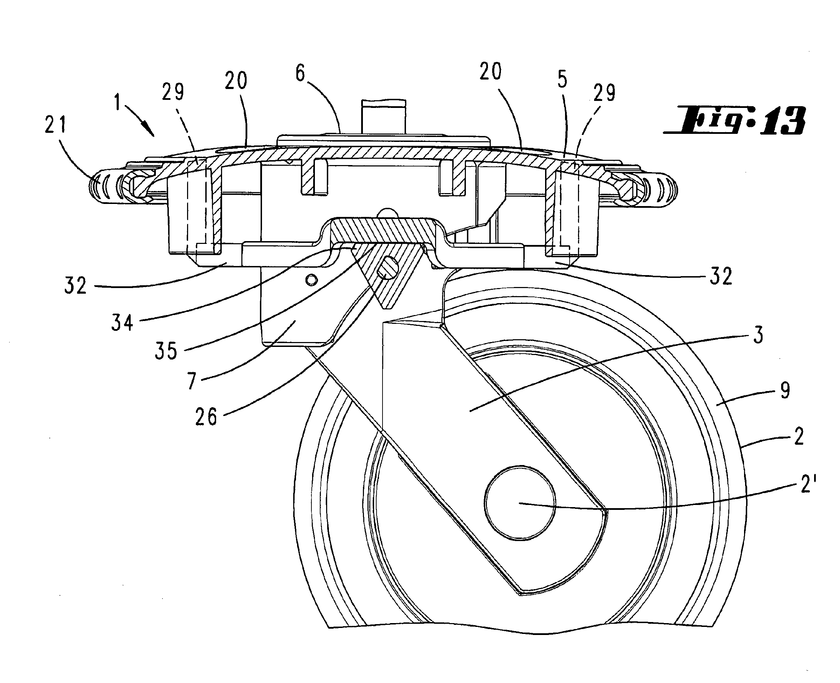

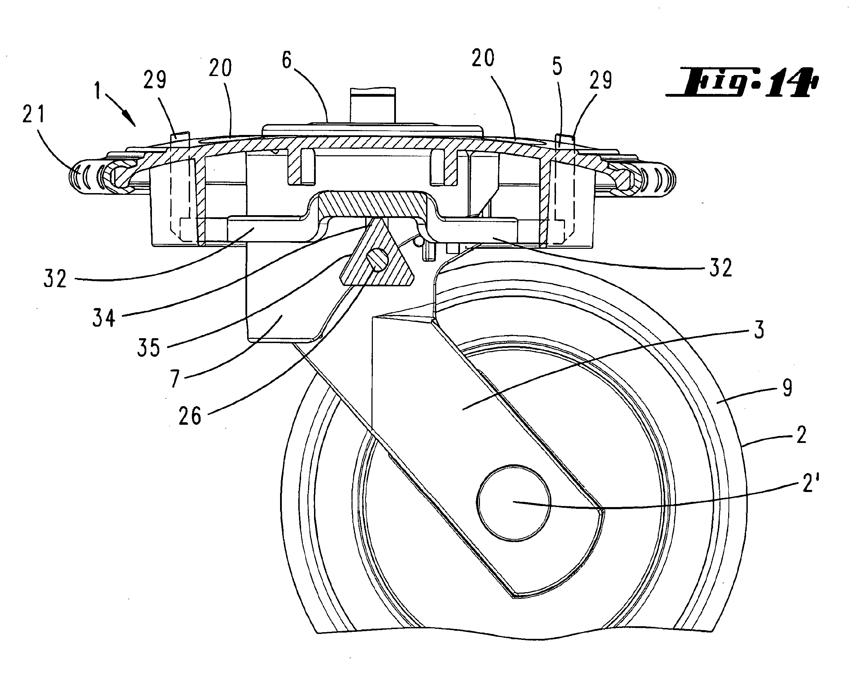

Bei der ersten Ausführungsform sind die Indikatoren 29 als sich vertikal erstreckende Endbereiche eines bzw. zweier Indikatorenträger 32 ausgebildet. Die Indikatorenträger 32 wirken mit an der Achse 26, beim Ausführungsbeispiel endseitig und gegenüberliegend bezüglich der Achse 26, ausgebildeten einem bzw. zwei Hebenockenscheiben 33 zusammen. Im betätigten Zustand, vgl. Fig. 14, ist auf Grund der Stellung der Hebenockenscheiben 33 ein Hebenocken-Anhebeeingriff 34 zu dem Indikatorenträger 32 gegeben. Dagegen wirkt in der nicht betätigten Stellung gemäß Fig. 13 der Indikatorenträger 32 mit einem Flachabschnitt 35 der Nockenscheibe zusammen, so dass sich der abgesenkte Zustand ergibt. Ein Indikatorenträger 32 weist ersichtlicht in seinem Zusammenwirkungsbereich mit einer Hebenockenscheibe 33 eine Abkröpfung auf. Bevorzugt sind zwei Indikatorenträger 32 vorgesehen, die insgesamt vier Indikatoren ausbilden.

Bezüglich der weiteren Ausführungsform der Indikatoren ist am Ende, bevorzugt an beiden gegenüberliegenden Enden, der Achse 26 ein Sternteil 38 angeordnet, das beim Ausführungsbeispiel 3 Zeiger 39 aufweist. Dadurch, dass nach außen das Sternteil 38 durch eine Abdeckung 40 abgedeckt ist, ist immer nur, in einer Betätigungsstellung, ein Zeiger 39 sichtbar. Beim Ausführungsbeispiel ragt er nach unten über die Abdeckung 40 hinaus. Die beiden anderen Zeiger 39 sind durch die Abdeckung 40 verdeckt.

In der Freigabestellung gemäß Fig.12 befinden sich praktisch alle Zeiger 39 hinter der Abdeckung 40.

Bei beiden Ausführungsformen ist bevorzugt ein das Betätigungselement 5 radial außen umfangender Stoßschutz 21 vorgesehen. Der Stoßschutz 21 ist als frei drehbar auf dem Betätigungselement 5 an dem radial äußeren Rand aufgenommener Umgreifabschnitt gebildet. Wenn die Rolle etwa mit einer Wand in Berührung kommt, kann zufolge der Reibung der Stoßschutz 21 relativ zu der Wand feststehend bleiben, so dass sich keine wesentlichen Spuren entwickeln können. Der Stoßschutz 21 ist bevorzugt aus einem vergleichsweise weichen Kunststoff gebildet. Zufolge dieses Stoßschutzes ergibt sich hinsichtlich des Betätigungselementes 5 zugleich auch eine Funktion als Abweiserrad. Die Rolle kann hierdurch also zufolge etwa vorgesehener Leitelemente zugleich in bestimmter Richtung geleitet werden.

**Bezugszeichenliste**

| | | | |
|---|---|---|---|
| 1 | Rolle | | |
| 2 | Rad | 2' | Radachse |
| 3 | Gabel | | |
| 4 | Vertikalabschnitt | | |
| 5 | Betätigungselement | | |
| 6 | Befestigungsbereich, -abschnitt | | |
| 7 | Wandung | | |
| 8 | Gegenlager | | |
| 9 | Lauffläche | | |
| 10 | Einwirkteil, Feststeller | | |
| 11 | Achse | | |
| 12 | Federteil | | |
| 13 | Langloch | | |
| 14 | Drücker | 14' | Ausnehmung |
| 15 | Wicklung | | |
| 16 | Bereich | | |
| 17 | (Richtungs-) Feststeller | | |
| 18 | Verzahnung | | |
| 19 | Lagerteils | | |
| 20 | Durchgriffsöffnungen | | |
| 21 | Stoßschutz | | |
| 22 | Rastaufnahme | | |
| 23 | Beaufschlagungsnocken | | |
| 24 | Mitnehmernocken, Nockenrad | 24' | Mitnehmernocken |
| 25 | Betätigungsbügel | | |
| 26 | Achse | | |
| 27 | Federbügel | | |
| 28 | Rückstellfeder | | |
| 29 | Indikator | | |
| 30 | Feder | | |
| 31 | Wicklungsachse | | |
| 32 | Indikatorenträger | | |
| 33 | Hebenockenscheibe | | |
| 34 | Hebenocken-Anhebeeingriff | | |
| 35 | Flachabschnitt | | |
| 36 | Abschrägung | | |
| 37 | Langloch | | |
| 38 | Sternteil | | |
| 39 | Zeiger | | |
| 40 | Abdeckung | | |
| | | | |
| F | Fuß-(Schuh-)Grundriss | | |
| V | Vertikale | | |

## Patentansprüche

1. Rolle (1) mit einem in einem Gehäuse aufgenommenen Rad (2) und einem Feststeller (10, 17), wobei der Feststeller (10, 17) durch Fußbetätigung eines Betätigungselementes (5), das, bezogen auf eine Vertikale (V), welche einen Befestigungsbereich der Rolle (1) durchsetzt, radial ausgreifend angeordnet ist, zu betätigen ist, **dadurch gekennzeichnet, dass** ein Betätigungsabschnitt des Betätigungselementes (5) sich umfangsmäßig jedenfalls so weit erstreckt, dass eine zweite Fußbetätigung in Umfangsrichtung bezogen auf die Vertikale (V) neben einem Bereich des Betätigungsabschnittes durchführbar ist, über den eine erste Fußbetätigung vorgenommen wurde, welcher Betätigungsabschnitt eine Betätigung des Feststellers (10,17) auch zulässt, ohne dass der Fuß notwendig in Überdeckung zu dem Rad (2) auf dem Betätigungsabschnitt des Betätigungselementes (5) aufzusetzen ist.

2. Rolle nach Anspruch 1, **dadurch gekennzeichnet, dass** der Betätigungsabschnitt umlaufend ausgebildet ist.

3. Rolle nach einem der vorhergehenden Ansprüche, **dadurch gekennzeichnet**, das Betätigungselement (5) einen radial außen und frei drehbar in Bezug auf das Betätigungselement (5) angeordneten Stoßschutz (21) aufweist

4. Rolle nach einem der vorhergehenden Ansprüche, **dadurch gekennzeichnet, dass** das Betätigungselement (5) sich bei einer Betätigung insgesamt vertikal bewegt.

5. Rolle nach einem der vorhergehenden Ansprüche, **dadurch gekennzeichnet, dass** ein auf eine Lauffläche (9) des Rades (2) wirkendes Einwirkteil (10) vorgesehen ist.

6. Rolle nach einem der vorhergehenden Ansprüche, **dadurch gekennzeichnet, dass** ein eine Betätigung anzeigender Indikator (29) vorgesehen ist.

7. Rolle nach einem der Ansprüche 5 oder 6, **dadurch gekennzeichnet, dass** das Betätigungselement (5) mit dem Einwirkteil (10) über eine Keilpaarung zusammenwirkt.

8. Rolle nach Anspruch 7, **dadurch gekennzeichnet, dass** die Keilpaarung im betätigten Zustand selbsthemmend ist.

9. Rolle nach einem der Ansprüche 5 bis 8, **dadurch gekennzeichnet, dass** das Betätigungselement (5) mit dem Einwirkteil (10) über einen Beaufschlagungsnocken (23) zusammenwirkt.

10. Rolle nach Anspruch 9, **dadurch gekennzeichnet, dass** eine Mehrzahl von nacheinander in Eingriff kommenden Beaufschlagungsnocken (23) an einem drehbar angeordneten Nockenrad (24) vorgesehen sind.

11. Rolle nach einem der Ansprüche 9 oder 10, **dadurch gekennzeichnet, dass** das Betätigungselement (5) in zwei aufeinanderfolgenden Betätigungen mit unterschiedlichen Beaufschlagungsnocken (23) auf das Einwirkteil (10) einwirkt.

12. Rolle nach einem der Ansprüche 9 bis 11, **dadurch gekennzeichnet, dass** der Beaufschlagungsnocken (23) Teil eines eine Mehrzahl von Beaufschlagungsnocken (23) aufweisenden Nockenrades (24) ist.

## Claims

1. Roller (1) having a wheel (2), which is accommodated in a housing, and a locking device (10, 17), the locking device (10, 17) being actuated by foot actuation of an actuating element (5) which is arranged so that it extends radially outwardly with respect to a vertical (V) that passes through a securing portion of the roller (1), **characterized in that** an actuating portion of the actuating element (5) extends circumferentially at least far enough that a second foot actuation in the circumferential direction with respect to the vertical (V) may be carried out next to an area of the actuating portion by way of which a first foot actuation has been carried out, which actuating portion also allows actuation of the locking device (10, 17) without the foot necessarily having to be placed overlying the wheel (2) on the actuating portion of the actuating element (5).

2. Roller according to Claim 1, **characterized in that** the actuating portion is provided around the circumference.

3. Roller according to one of the preceding claims, **characterized in that** the actuating element (5) has a radially outward impact protector (21) which is freely rotatable with respect to the actuating element (5).

4. Roller according to one of the preceding claims, **characterized in that** the actuating element (5) moves vertically as a whole during an actuation.

5. Roller according to one of the preceding claims, **characterized in that** an action part (10) which acts on a running surface (9) of the wheel (2) is provided.

6. Roller according to one of the preceding claims, **characterized in that** an indicator (29) which indicates an actuation is provided.

7. Roller according to one of Claims 5 or 6, **characterized in that** the actuating element (5) interacts with the action part (10) by way of a wedge pair.

8. Roller according to Claim 7, **characterized in that** the wedge pair is self-locking in the actuated state.

9. Roller according to one of Claims 5 to 8, **characterized in that** the actuating element (5) interacts with the action part (10) via an action cam (23).

10. Roller according to Claim 9, **characterized in that** a plurality of action cams (23) which engage in succession are provided on a rotatably mounted cam wheel (24).

11. Roller according to one of Claims 9 or 10, **characterized in that** the actuating element (5) acts on the action part (10) in two successive actuations with different action cams (23).

12. Roller according to one of Claims 9 to 11, **characterized in that** the action cam (23) is part of a cam wheel (24) having a plurality of action cams (23).

## Revendications

1. Roulette avec une roue (2) reçue dans un boîtier et un dispositif de blocage (10, 17), dans lequel le dispositif de blocage est prévu pour être actionné par actionnement par le pied d'un élément d'actionnement (5) agencé en extension radiale par rapport à une verticale (V) qui passe par une zone de fixation de la roulette (1), **caractérisée en ce qu'**une partie d'actionnement de l'élément d'actionnement (5) s'étend du point de vue circonférentiel au moins au point qu'un deuxième actionnement par le pied soit possible en direction circonférentielle par rapport à la verticale (V) à côté d'une zone de l'élément d'actionnement sur laquelle a été opéré un premier actionnement par le pied, laquelle partie d'actionnement autorise aussi un actionnement du dispositif de blocage (10, 17) sans qu'il soit nécessaire de placer le pied en recouvrement de la roue (2) sur la partie d'actionnement de l'élément d'actionnement (5).

2. Roulette selon la revendication 1, **caractérisée en ce que** la partie d'actionnement est circulaire.

3. Roulette selon l'une des revendications précédentes, **caractérisée en ce que** l'élément d'actionnement (5) présente un pare-chocs (21) agencé radialement à l'extérieur et tournant librement par rapport à l'élément d'actionnement (5).

4. Roulette selon l'une des revendications précédentes, **caractérisée en ce que** l'élément d'actionnement (5) se déplace dans l'ensemble verticalement lors d'un actionnement.

5. Roulette selon l'une des revendications précédentes, **caractérisée en ce qu'**est prévue une pièce d'engagement venant agir sur une surface de roulement (9) de la roue (2).

6. Roulette selon l'une des revendications précédentes, **caractérisée en ce qu'**est prévu un indicateur (29) de signalisation d'actionnement.

7. Roulette selon l'une des revendications 5 ou 6, **caractérisée en ce que** l'élément d'actionnement (5) coopère avec la pièce d'engagement (10) par le biais d'un appariement en coin.

8. Roulette selon la revendication 8, **caractérisé en ce que** l'appariement en coin est autobloquant dans l'état actionné.

9. Roulette selon l'une des revendications 5 à 8, **caractérisé en ce que** l'élément d'actionnement (5) coopère avec la partie d'engagement (10) par le biais d'un taquet (23).

10. Roulette selon la revendication 9, **caractérisée en ce que** sont prévus sur une roue (23), une pluralité de taquets (23) lesquels entrent successivement en action.

11. Roulette selon l'une des revendications 9 ou 10, **caractérisée en ce que** l'élément d'actionnement (5) agit sur la partie d'engagement (10) avec deux taquets (23) différents lors de deux actionnements successifs.

12. Roulette selon l'une des revendications 9 à 11, **caractérisée en ce que** le taquet (23) fait partie d'une roue (24) présentant une pluralité de taquets (23).
